# EUROPEAN PATENT SPECIFICATION

(11) **EP 0 645 168 B1**
(45) Date of publication and mention of the grant of the patent: **04.06.1997**
(21) Application number: 94112712.8
(22) Date of filing: 15.08.1994
(51) Int. Cl.: B01D 19/00

(54) **Stripping of volatiles from liquid**
Strippen von flüchtigen Stoffen aus einer Flüssigkeit
Stripage de volatile d'un liquide

(30) Priority: 16.08.1993 US 106676
(43) Date of publication of application: 29.03.1995
(73) Proprietor: PRAXAIR TECHNOLOGY, INC., Danbury, CT 06810-5113 (US)
(72) Inventor: Cheng, Alan T.Y., Livingston, New Jersey 07039 (US)
(74) Representative: Schwan, Gerhard, Dipl.-Ing.

(56) References cited:
- EP-A- 0 565 777
- DE-A- 2 522 324
- DE-A- 3 239 066

## Description

### BACKGROUND

This invention relates to stripping of a volatile from a liquid with a stripping gas. A common liquid to be stripped is water to be used, for example, for dilution of fruit juice concentrate, or in the production of beer. Dissolved oxygen is a volatile commonly stripped from the water to prevent degradation of the resulting product by fermentation or by oxidation. Components of the product that are responsible for taste and aroma are particularly sensitive to oxidation. Water that has been in contact with air has dissolved oxygen from the air. It is generally desirable to reduce the oxygen concentration in water intended for the above uses to less than 0.5 ppm, which typically requires at least two stages of stripping.

The volatile is commonly stripped by dispersing the stripping gas throughout the liquid and then separating the liquid and gas. The rate of volatile removal and the final concentration of volatile in the liquid depends on the degree of dispersion of the gas in the liquid, the contact time, the turbulence existing during the contact, and the departure of actual conditions from thermodynamic equilibrium conditions in the liquid-volatile-stripping gas system. The prior art has used apparatus which has been bulky, relatively high in initial cost and inefficient so as to require an undesirably high consumption of stripping gas.

DE-A-3239066 already discloses a method and an apparatus for the deaeration of water used for the production of CO₂-containing, non-alcoholic beverages, wherein CO₂ is added to fresh water which is saturated with air. The CO₂ is partly dissolved in the water as a function of the respective partial pressures. Subsequently, this water is atomized and deaerated under vacuum whereby both air and already bonded CO₂ are debonded. This gas mixture is exhausted, and the deaerated water still containing residual gas, which can not be removed by the vacuum and which consists of CO₂ only, is collected and further processed. The known apparatus is provided with a first injection nozzle for injecting into the fresh water a gas mixture consisting of about 90% CO₂ and the remainder air. The CO₂-enriched water obtained thereby is sprayed into a vacuum vessel from which gas is evacuated by a vacuum pump. Deaerated water is pumped from the vacuum vessel to an equalization vessel which is connected to a finished beverage tank. A second injection nozzle for injecting CO₂ into the deaerated water is disposed in a conduit leading from the vacuum pump to the equalization vessel. The equalization vessel has a gas exit connected to a gas inlet of the first injection nozzle.

Apparatus which produces a fine dispersion of gas in liquid under turbulent conditions and a process which maintains adequate potential for volatile transfer from the liquid to the gas are needed to achieve an economically tolerable consumption of stripping gas, low initial apparatus cost and apparatus compactness. In addition, where products that will be consumed are involved, the apparatus needs to be easy to clean and sterilize.

### SUMMARY

The present invention satisfies the above needs.

One aspect of the present invention is a method as defined in claim 1.

Further aspects of the subject invention are apparatuses as defined in claim 5 and in claim 6, respectively.

Preferably the stripping gas is injected with at least sonic velocity into the first separated liquid. Preferably the first separated liquid is pressurized in a pump before mixing with stripping gas to form a second mixture.

### DRAWING

These and other features, aspects and advantages of the present invention will become better understood with reference to the following description, appended claims, and accompanying figure which is a schematic of a preferred embodiment of the apparatus of the invention.

### DESCRIPTION

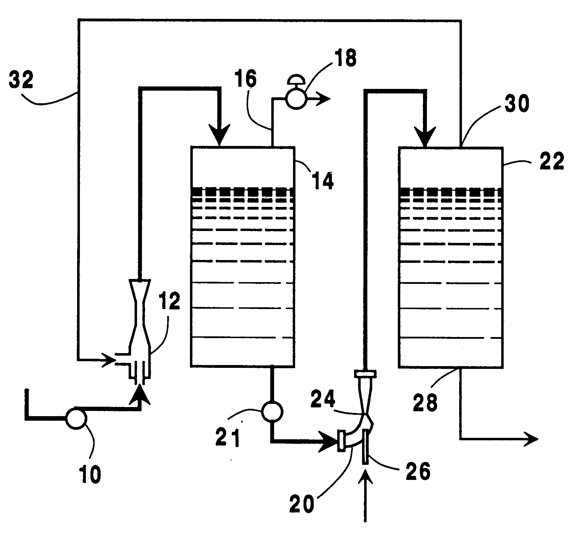

The present invention provides a process and an apparatus for stripping a volatile from a feed liquid with a stripping gas, as depicted in the figure. An optional pump 10 pressurizes feed liquid if the feed liquid is supplied at insufficient pressure for the conduct of the process. The exit of the feed pump 10 leads to the inlet of a first gas-liquid mixing means 12. The pressurized feed liquid is admitted to the first-mixing-means inlet for liquid, stripping gas is admitted to the first-mixing-means inlet for stripping gas, and a first gas-liquid mixture discharges from the first-mixing-means exit. The stripping gas is typically, an inert gas, preferably nitrogen because of its low cost, However, other gases which do not cause degradation of the liquid may be used, such as, for example, argon, carbon dioxide, or helium. The stripping gas may be a gas stream produced in another portion of the process. The stripping gas itself should have a lower concentration of the volatile to be stripped from the liquid than the concentration that would exist in equilibrium with the concentration desired in the liquid.

The first mixing means 12 preferably is an eductor having a channel of venturi shape through which the feed liquid flows longitudinally, and into which stripping gas is admitted either longitudinally or transversely. However the first mixing means may simply be a pipe tee that brings together a flow of feed liquid and a flow of stripping gas causing further mixing during the flow in piping downstream of the tee.

The first-mixing-means exit communicates with and discharges a first gas-liquid mixture into an inlet to a first container 14 for separating a first gas-liquid mixture. The first container has a vent 16 for first separated gas, which may lead directly to the atmosphere, allowing the first container to operate at nearly atmospheric pressure. Optionally the vent 16 may have a back pressure regulating valve 18 to allow the first container 14 to operate at a selected pressure.

The first container 14 has an exit communicating with and discharging first separated liquid into an inlet to a second gas-liquid mixing means 20. However, a pump 21 is preferable to pressurize the first separated liquid delivered to the second mixing means 20 thereby preferably allowing the first container 14 to operate at atmospheric pressure. The second mixing means 20 has a inlet for and receives stripping gas, and discharges second gas-liquid mixture from an exit in communication with the inlet to a second container 22 for separating second gas-liquid mixture. Preferably the stripping gas admitted to the second mixing means 20 is fresh stripping gas, preferably nitrogen.

Preferably the second mixing means 20 has a channel with a flow constriction 24, most preferably a venturi type constriction, through which the first separated liquid flows, and into which, stripping gas is admitted either longitudinally or transversely, by a means for introducing stripping gas, such as a tube 26. Preferably the tube 26 has its gas introduction end located proximately upstream of the flow constriction 24. In such a device, the stripping gas is introduced into the flowing first separated liquid to form a flowing mixture which is accelerated in the constriction 24. Preferably first separated liquid is supplied with sufficient pressure to develop at least sonic velocity in the constriction 24. Downstream of the constriction 24, the flowing mixture is decelerated to subsonic velocity to generate a shock wave and a resultant, very fine dispersion of gas bubbles in the liquid. Preferably the stripping gas is injected with at least sonic velocity into the first separated liquid, which further enhances the stripping efficiency. Alternately, the second mixing means 20 may simply be a pipe tee that brings together a flow of first separated liquid and stripping gas causing further mixing during the flow in piping downstream of the tee. However this configuration has lower effeciency, but may still be useable if the desired volatile reduction ratio is not great.

The second container 22 has an exit 28 for second separated liquid which is the desired product. The second container 22 also has a vent 30 for second separated gas which may be vented to the atmosphere. Preferably the second separated gas, however, is returned by a conduit 32 to the first mixing means 12, and used as stripping gas therein, thereby reducing the consumption of stripping gas. Most preferably, the first mixing means 12 is an eductor which removes second separated gas from the second container, produces a vacuum in the second container, and also compresses the second separated gas and mixes it with the feed liquid. Rather than an eductor, several other components may be employed. A vacuum means may be used, such as a common vacuum pump, preferably of a type which does not introduce contamination. The vacuum pump may reduce the pressure over the second separated liquid to a pressure somewhat higher than the vapor pressure of the second separated liquid at its existing temperature thereby avoiding boiling of the second separated liquid. Compression means, such as a common gas compressor, may also be provided to compress the second separated gas from the vacuum means and deliver it to the first mixing means. However, as stated above, most preferably, the first mixing means, the vacuum means, and the compression means are conveniently and advantageously combined into a single, compact, relatively inexpensive component, namely, an eductor.

Operation of the second container 22 at reduced pressure, that is, at a pressure below atmospheric, is particularly beneficial in that the equilibrium concentration of the volatile component in the second separated liquid, according to Henry's law, is approximately proportional to the total pressure over the second separated liquid. Thus, reducing the gas pressure in the second container allows high potential for mass transfer and provides for sufficient stripping potential in the second container so that the second separated gas may be used for the stripping gas in the first mixing means without necessitating fresh stripping gas. The pressure in the second container 22 can be reduced to a value somewhat above the vapor pressure of the second separated liquid at its existing temperature without boiling of the second separated liquid. Thus the second separated liquid may be stripped to very low concentrations of undesirable volatile components.

The preferred form of second mixing means 20, namely the in-line gas-injection venturi stripper with at least sonic gas injection is also advantageous in that it produces a very fine dispersion of stripping gas in second separated liquid and a shock wave which enhances transfer of the volatile from the liquid to the stripping gas. This device takes advantage of the high potential for mass transfer of volatile component achieved by the vacuum condition in the second container, and is an additional factor which allows sufficient stripping in the second container so that second separated gas may be used for the stripping gas in the first mixing means. Furthermore, the reduced pressure in the second container allows a sonic pressure ratio to be reached for the injection and expansion of the stripping gas with only a moderate injection pressure for the stripping gas. Thus, this invention advantageously and synergistically combines equipment and operating parameters to achieve efficient and economical operation.

### EXAMPLE

Water feed liquid containing 10 ppm of oxygen is stripped using 0.65 standard cubic meters of nitrogen gas at normal ambient temperature per cubic meter of water. The nitrogen gas initially contains 5 ppm of oxygen. Using the process provided by this invention and apparatus including the in-line gas-injection venturi stripper and the eductor as described, the results listed in the following table are obtained.

| | Without pump for first separated liquid | With pump for first separated liquid |
|---|---|---|
| First mixing means liquid inlet pres., kPa gauge | 552 | 413 |
| First container pressure, kPa gauge | 137 | 0 |
| First separated liquid oxygen conc., ppm | 1.82 | 0.91 |
| Second mixing means liquid inlet pres., kPa gauge | 137 | 137 |
| Second mixing means strip. gas pres., kPa gauge | 482 | 482 |
| Second container pressure, kPa absolute | 339 | 339 |
| Second separated gas oxygen conc., ppm | 243 | 124 |
| Second separated liquid oxygen conc., ppm | 0.046 | 0.023 |

Although the invention has been described with reference to specific embodiments, it will be appreciated that it is intended to cover all modifications and equivalents within the scope of the appended claims.

## Claims

1. A method for stripping a volatile component from a feed liquid with a stripping gas, said method comprising:
(a) mixing said feed liquid to be stripped with stripping gas to form a first mixture;
(b) separating at atmospheric or above atmospheric pressure said first mixture into a first separated liquid and a first separated gas;
(c) mixing said first separated liquid with stripping gas to form a second mixture;
(d) drawing a vacuum on said second mixture;
(e) separating under vacuum said second mixture into a second separated liquid and a second separated gas; and
(f) compressing and using said second separated gas as stripping gas for mixing with said feed liquid to form said first mixture in step (a).

2. The method as in claim 1 wherein said mixing said first separated liquid with stripping gas to form a second mixture in step (c) comprises:
(1) causing said first separated liquid to flow;
(2) introducing said stripping gas into said flowing first separated liquid to form a flowing mixture;
(3) accelerating said flowing mixture to at least sonic velocity;
(4) decelerating said flowing mixture to subsonic velocity to create a sonic shock wave and a resultant dispersion of gas bubbles in said liquid.

3. The method as in claim 1 wherein in step (c) said stripping gas is injected with at least sonic velocity into said first separated liquid.

4. The method as in claim 1 further comprising:
(g) pumping and pressurizing said first separated liquid before mixing with stripping gas to form a second mixture.

5. An apparatus for carrying out the method of claim 1, said apparatus comprising:
(a) a first gas-liquid mixing means (12) having an inlet for feed liquid to be stripped, an inlet for stripping gas and an exit for a first gas-liquid mixture;
(b) a first container (14) for separating a first gas-liquid mixture, said first container having an inlet communicating with said first mixing means exit, a vent (16) for first separated gas, and an exit for first separated liquid;
(c) a second gas-liquid mixing means (20) having an inlet for first separated liquid, said inlet communicating with said first-container exit for first separated liquid, an inlet for stripping gas, and an exit for second gas-liquid mixture;
(d) a second container (22) for separating second gas-liquid mixture having all inlet communicating with said second-mixing means exit, a vent (30) for second separated gas, and an exit for second separated liquid;
(e) vacuum means for removing second separated gas from said second container and producing a vacuum in said second container, said vacuum means having an inlet communicating with said second-container vent; and an exit for discharging second separated gas;
(f) conduit communicating said vacuum-means exit with said first-mixing-means inlet for stripping gas; and
(g) compression means in said conduit.

6. An apparatus for carrying out the method of claim 1, said apparatus comprising:
(a) an eductor (12), as first gas-liquid mixing means, having an inlet for feed liquid to be stripped, an inlet for stripping gas and an exit for a first gas-liquid mixture formed in said eductor;
(b) a first container (14) for separating a first gas-liquid mixture, said first container having an inlet communicating with said eductor exit, a vent (16) for first separated gas, and an exit for first separated liquid;
(c) a second gas-liquid mixing means (20) having an inlet for first separated liquid, said inlet communicating with said first-container exit for first separated liquid, an inlet for stripping gas, and an exit for second gas-liquid mixture;
(d) a second container (22) for separating second gas-liquid mixture having an inlet communicating with said second-mixing means exit, a vent (30) for second separated gas, and an exit for second separated liquid; and
(e) conduit means (32) communicating said vent (30) for second separated gas with said eductor inlet for stripping gas,
said eductor
removing through said conduit means second separated gas from said second container and
producing a vacuum in said second container, and
compressing and mixing second separated gas with feed liquid.

7. The apparatus as in claim 5 or 6, wherein said second gas-liquid mixing means (20) further comprises a flow constriction (24) for passage therethrough of second gas-liquid mixture.

8. The apparatus as in any one of claims 5 to 7 wherein said second gas-liquid mixing means (20) further comprises means (26) for injecting stripping gas into first separated liquid.

9. The apparatus as in any one of claims 5 to 8 further comprising a pump (21) having an inlet communicating with said first container exit for first separated liquid and an exit communicating with said second-mixing means inlet for second liquid to be stripped.

10. The apparatus as in any one of claims 5 to 9 further comprising a pump (10) having an exit communicating with said first-mixing-means inlet, said pump for pressurizing feed liquid.

## Patentansprüche

1. Verfahren zum Strippen einer flüchtigen Komponente von einer Einsatzflüssigkeit mit einem Stripgas, wobei im Zuge des Verfahrens:
(a) die zu strippende Einsatzflüssigkeit mit Stripgas gemischt wird, uni ein erstes Gemisch zu bilden;
(b) das erste Gemisch bei Atmosphärendruck oder Überatmosphärendruck in eine erste abgetrennte Flüssigkeit und ein erstes abgetrenntes Gas zerlegt wird;
(c) die erste abgetrennte Flüssigkeit mit Stripgas gemischt wird, um ein zweites Gemisch zu bilden;
(d) auf das zweite Gemisch ein Unterdruck angewendet wird;
(e) das zweite Gemisch bei Unterdruck in eine zweite abgetrennte Flüssigkeit und ein zweites abgetrenntes Gas zerlegt wird; und
(f) das zweite abgetrennte Gas verdichtet und als Stripgas für das Mischen mit der Einsatzflüssigkeit benutzt wird, um das erste Gemisch des Schrittes (a) zu bilden.

2. Verfahren nach Anspruch 1, bei welchem zum Mischen der ersten abgetrennten Flüssigkeit mit Stripgas zwecks Bildung eines zweiten Gemisches im Schritt (c):
(1) die erste abgetrennte Flüssigkeit zum Strömen gebracht wird;
(2) das Stripgas in die strömende erste abgetrennte Flüssigkeit eingebracht wird, um ein strömendes Gemisch zu bilden;
(3) das strömende Gemisch auf mindestens Schallgeschwindigkeit beschleunigt wird;
(4) das strömende Gemisch auf eine unter der Schallgeschwindigkeit liegende Geschwindigkeit abgebremst wird, um eine Schallschockwelle und eine sich daraus ergebende Dispersion von Gasblasen in der Flüssigkeit zu erzeugen.

3. Verfahren nach Anspruch 1, bei welchem im Schritt (c) das Stripgas mit mindestens Schallgeschwindigkeit in die erste abgetrennte Flüssigkeit injiziert wird.

4. Verfahren nach Anspruch 1, bei welchem ferner
(g) die erste abgetrennte Flüssigkeit gepumpt und aufgedrückt wird, bevor sie zwecks Bildung eines zweiten Gemisches mit Stripgas gemischt wird.

5. Vorrichtung zum Ausführen des Verfahrens von Anspruch 1, versehen mit
(a) einer ersten Gas/Flüssigkeits-Mischanordnung (12) mit einem Einlaß für zu strippende Einsatzflüssigkeit, einem Einlaß für Stripgas und einem Auslaß für ein erstes Gas/Flüssigkeits-Gemisch;
(b) einem ersten Behälter (14) zum Abtrennen eines ersten Gas/Flüssigkeits-Gemisches, wobei der erste Behälter einen Einlaß, der mit dem Auslaß der ersten Mischanordnung in Verbindung steht, einen Abzug (16) für erstes abgetrenntes Gas und einen Auslaß für erste abgetrennte Flüssigkeit aufweist;
(c) einer zweiten Gas/Flüssigkeits-Mischanordnung (20) mit einem Einlaß für erste abgetrennte Flüssigkeit, der mit dem Auslaß des ersten Behälters für erste abgetrennte Flüssigkeit in Verbindung steht, einem Einlaß für Stripgas und einem Auslaß für ein zweites Gas/Flüssigkeits-Gemisch;
(d) einem zweiten Behälter (22) zum Abtrennen eines zweiten Gas/Flüssigkeits-Gemisches, wobei der zweite Behälter einen Einlaß, der mit dem Auslaß der zweiten Mischanordnung in Verbindung steht, einen Abzug (30) für zweites abgetrenntes Gas und einen Auslaß für zweite abgetrennte Flüssigkeit aufweist;
(e) einer Vakuumanordnung zum Abziehen von zweitem abgetrennten Gas von dem zweiten Behälter und zum Erzeugen eines Unterdrucks in dem zweiten Behälter, wobei die Vakuumanordnung über einen Einlaß, der mit dem Abzug des zweiten Behälters in Verbindung steht, und einen Auslaß zum Abgeben von zweiten, abgetrennten Gas verfügt;
(f) einer Leitung, die den Auslaß der Vakuumanordnung mit dem Stripgaseinlaß der ersten Mischanordnung verbindet; und
(g) einer in der Leitung sitzenden Kompressionsanordnung.

6. Vorrichtung zum Ausführen des Verfahrens von Anspruch 1, versehen mit
(a) einem Eduktor (12) als erste Gas/Flüssigkeits-Mischanordnung mit einem Einlaß für zu strippende Einsatzflüssigkeit, einem Einlaß für Stripgas und einem Auslaß für ein erstes in dem Eduktor gebildetes Gas/Flüssigkeits-Gemisch;
(b) einem ersten Behälter (14) zum Abtrennen eines ersten Gas/Flüssigkeits-Gemisches, wobei der erste Behälter einen Einlaß, der mit dem Eduktorauslaß in Verbindung steht, einen Abzug (16) für erstes abgetrenntes Gas und einen Auslaß für erste abgetrennte Flüssigkeit aufweist;
(c) einer zweiten Gas/Flüssigkeits-Mischanordnung (20) mit einem Einlaß für erste abgetrennte Flüssigkeit, der mit dem Auslaß des ersten Behälters für erste abgetrennte Flüssigkeit in Verbindung steht, einem Einlaß für Stripgas und einem Auslaß für ein zweites Gas/Flüssigkeits-Gemisch;
(d) einem zweiten Behälter (22) zum Abtrennen eines zweiten Gas/Flüssigkeits-Gemisches, wobei der zweite Behälter einen Einlaß, der mit dem Auslaß der zweiten Mischanordnung in Verbindung steht, einen Abzug (30) für zweites abgetrenntes Gas und einen Auslaß für zweite abgetrennte Flüssigkeit aufweist;
(e) einer Leitungsanordnung (32), die den Abzug (30) für zweites abgetrenntes Gas mit dem Stripgaseinlaß des Eduktors verbindet,
wobei der Eduktor
zweites abgetrenntes Gas durch die Leitungsanordnung von dein zweiten Behälter abzieht und
in dem zweiten Behälter einen Unterdruck erzeugt,
und das zweite abgetrennte Gas verdichtet und mit Einsatzflüssigkeit mischt.

7. Vorrichtung nach Anspruch 5 oder 6, wobei die zweite Gas/Flüssigkeits-Mischanordnung (20) ferner eine Strömungseinschnürung (24) aufweist, um durch diese zweites Gas/Flüssigkeits-Gemisch zu leiten.

8. Vorrichtung nach einem der Ansprüche 5 bis 7, bei welcher die zweite Gas/Flüssigkeits-Mischanordnung (20) ferner Mittel zum Injizieren von Stripgas in die erste abgetrennte Flüssigkeit aufweist.

9. Vorrichtung nach einem der Ansprüche 5 bis 8, ferner versehen mit einer Pumpe (21) mit einem Einlaß, der mit dem Auslaß des ersten Behälters für erste abgetrennte Flüssigkeit in Verbindung steht, sowie mit einen, Auslaß, der mit dem Einlaß für zweite zu strippende Flüssigkeit der zweiten Gas/Flüssigkeits-Mischanordnung in Verbindung steht.

10. Vorrichtung nach einem der Ansprüche 5 bis 9, ferner versehen mit einer Pumpe (10), die über einen Auslaß verfügt, der mit dem Einlaß der ersten Mischanordnung in Verbindung steht, wobei die Pumpe dem Aufdrücken von Einsatzflüssigkeit dient.

## Revendications

1. Procédé d'élimination d'un constituant volatil d'un liquide d'alimentation par un gaz d'élimination, ledit procédé comprenant :
(a) le fait de mélanger ledit liquide d'alimentation dont on doit éliminer ce constituant avec un gaz d'élimination pour former un premier mélange ;
(b) le fait de séparer sous la pression atmosphérique ou sous une pression supérieure ledit premier mélange en un premier liquide séparé et un premier gaz séparé ;
(c) le fait de mélanger ledit premier liquide séparé avec du gaz d'élimination pour former un second mélange ;
(d) le fait d'établir un vide sur ledit second mélange ;
(e) le fait de séparer sous vide ledit second mélange en un second liquide séparé et un second gaz séparé ; et
(f) le fait de comprimer et d'utiliser ledit second gaz séparé comme gaz d'élimination pour le mélanger audit liquide d'alimentation pour former ledit premier mélange dans l'étape (a).

2. Procédé selon la revendication 1, dans lequel ledit mélange dudit premier liquide séparé avec du gaz d'élimination pour former un second mélange dans l'étape (c) comprend :
(1) le fait de faire écouler ledit premier liquide séparé ;
(2) le fait d'introduire ledit gaz d'élimination dans ledit premier liquide séparé s'écoulant pour former un mélange s'écoulant ;
(3) le fait d'accélérer ledit mélange s'écoulant à une vitesse au moins sonique ;
(4) le fait de décélérer ledit mélange s'écoulant à une vitesse subsonique pour créer une onde de choc sonique et une dispersion de bulles de gaz dans ledit liquide en résultant.

3. Procédé selon la revendication 1, dans lequel dans l'étape (c), ledit gaz d'élimination est injecté à une vitesse au moins sonique dans ledit premier liquide séparé.

4. Procédé selon la revendication 1, comprenant en outre :
(g) le fait de pomper et de mettre sous pression ledit premier liquide séparé avant de le mélanger à du gaz d'élimination pour former un second mélange.

5. Appareil pour appliquer le procédé selon la revendication 1, ledit appareil comprenant :
(a) un premier moyen de mélange gaz-liquide (12) ayant un orifice d'entrée pour du liquide d'alimentation dont on doit éliminer un constituant, un orifice d'entrée pour du gaz d'élimination et une sortie pour un premier mélange gaz-liquide ;
(b) un premier récipient (14) pour séparer un premier mélange gaz-liquide, ledit premier récipient ayant un orifice d'entrée communiquant avec ladite sortie du premier moyen de mélange, un orifice de purge (16) pour du premier gaz séparé et une sortie pour du premier liquide séparé ;
(c) un second moyen de mélange gaz-liquide (20) ayant un orifice d'entrée pour du premier liquide séparé, ledit orifice d'entrée communiquant avec ladite sortie dudit premier récipient pour du premier liquide séparé, un orifice d'entrée pour du gaz d'élimination et une sortie pour du second mélange gaz-liquide ;
(d) un second récipient (22) pour séparer du second mélange gaz-liquide ayant un orifice d'entrée communiquant avec ladite sortie du second moyen de mélange, un orifice de purge (30) pour du second gaz séparé et une sortie pour du second liquide séparé ;
(e) un moyen pour faire le vide destiné à éliminer du second gaz séparé dudit second récipient et à produire un vide dans ledit second récipient, ledit moyen pour faire le vide ayant un orifice d'entrée communiquant avec ledit orifice de purge du second récipient ; et une sortie pour évacuer du second gaz séparé ;
(f) une conduite faisant communiquer ladite sortie du moyen pour faire le vide avec ledit orifice d'entrée dudit premier moyen de mélange pour le gaz d'élimination ; et
(g) un moyen de compression dans ladite conduite.

6. Appareil pour appliquer le procédé selon la revendication 1, ledit appareil comprenant :
(a) un éjecteur (12), comme premier moyen de mélange gaz-liquide, ayant un orifice d'entrée pour du liquide d'alimentation dont on doit éliminer un constituant, un orifice d'entrée pour du gaz d'élimination et une sortie pour un premier mélange gaz-liquide formé dans ledit éjecteur ;
(b) un premier récipient (14) pour séparer un premier mélange gaz-liquide, ledit premier récipient ayant un orifice d'entrée communiquant avec ladite sortie de l'éjecteur, un orifice de purge (16) pour du premier gaz séparé et une sortie pour du premier liquide séparé ;
(c) un second moyen de mélange gaz-liquide (20) ayant un orifice d'entrée pour du premier liquide séparé, ledit orifice d'entrée communiquant avec ladite sortie dudit premier récipient pour du premier liquide séparé, un orifice d'entrée pour du gaz d'élimination et une sortie pour du second mélange gaz-liquide ;
(d) un second récipient (22) pour séparer du second mélange gaz-liquide ayant un orifice d'entrée communiquant avec ladite sortie du second moyen de mélange, un orifice de purge (30) pour du second gaz séparé et une sortie pour du second liquide séparé ; et
(e) un moyen de conduite (32) faisant communiquer ledit orifice de purge (30) pour du second gaz séparé avec ledit orifice d'entrée dudit éjecteur pour du gaz d'élimination,
ledit éjecteur éliminant par ledit moyen de conduite du second gaz séparé dudit second récipient et
produisant un vide dans ledit second récipient, et
comprimant et mélangeant du second gaz séparé avec le liquide d'alimentation.

7. Appareil selon la revendication 5 ou 6, dans lequel ledit second moyen de mélange gaz-liquide (20) comprend en outre un étranglement de l'écoulement (24) pour le passage à travers celui-ci de second mélange gaz-liquide.

8. Appareil selon l'une quelconque des revendications 5 à 7, dans lequel ledit second moyen de mélange gaz-liquide (20) comprend en outre des moyens (26) pour injecter du gaz d'élimination dans du premier liquide séparé.

9. Appareil selon l'une quelconque des revendications 5 à 8, comprenant en outre une pompe (21) ayant un orifice d'entrée communiquant avec ladite sortie du premier récipient pour du premier liquide séparé et une sortie communiquant avec ledit orifice d'entrée du second moyen de mélange pour du second liquide dont on doit éliminer un constituant.

10. Appareil selon l'une quelconque des revendications 5 à 9, comprenant en outre une pompe (10) ayant une sortie communiquant avec ledit orifice d'entrée du premier moyen de mélange, ladite pompe servant à mettre sous pression du liquide d'alimentation.
